# EUROPEAN PATENT SPECIFICATION

(11) **EP 3 327 308 B1**
(45) Date of publication and mention of the grant of the patent: **30.12.2020**
(21) Application number: 17200264.4
(22) Date of filing: 07.11.2017
(51) Int. Cl.: F16D 55/36, F16D 65/12, F16D 65/847

(54) **BRAKE SYSTEM WITH BRIDGED CLIP RETAINER**
BREMSSYSTEM MIT ÜBERBRÜCKTEM CLIPHALTER
SYSTÈME DE FREINAGE AVEC DISPOSITIF DE RETENUE D'ATTACHE À PONT

(30) Priority: 09.11.2016 US 201615346951
(43) Date of publication of application: 30.05.2018
(73) Proprietor: Goodrich Corporation, Charlotte, NC 28217-4578 (US)
(72) Inventor: STEVENSON, John A., Beavercreek, OH 45431 (US)
(74) Representative: Dehns

(56) References cited:
- EP-A1- 1 988 305
- EP-A1- 2 000 694
- EP-A1- 3 072 610
- WO-A1-2005/106279
- US-A- 3 972 395
- US-A- 4 007 814
- US-B1- 6 419 056

## Description

### FIELD

The present disclosure relates to braking systems, and more specifically, to floating clip retainers of braking systems.

### BACKGROUND

Aircraft generally include one or more landing gear having wheels for supporting the aircraft while the aircraft is not airborne. Aircraft generally include a braking system to aid in reducing forward velocity of the aircraft during taxi and landing. Conventional aircraft braking systems generally include retention devices that hold protective inserts (commonly referred to as "clips") between adjacent rotor drive lugs of a rotor. These conventional retention devices can be used to retain the clip in place. However, these conventional retention devices, if not properly mounted to the rotor drive lugs, can bend, flex, and/or break during operation of the braking system. Properly mounting conventional retention devices is especially difficult in systems in which portions of the rotor drive lug are removed for heat transfer benefits, thereby limiting the area available for mounting the retention devices to the rotor drive lugs. A retention device is taught in US 4 007 814. and in EP 3 072 610 A1.

### SUMMARY

Disclosed herein, according to various embodiments, is a brake system as defined in claim 1.

In various preferred embodiments the first circumferentially lateral portions and the second circumferentially lateral portions may include an aperture for receiving a fastener. In various preferred embodiments, the first middle portion and the second middle portion each include a continuous outer surface. In various preferred embodiments, the middle radial dimension is comparatively less than a diameter of the aperture.

According to various preferred embodiments, a bridge radial dimension of the bridge segment is comparatively less than a middle radial dimension of the first middle portion and the second middle portion. In various preferred embodiments, a radially outward surface of the bridge segment is substantially flush with a radially outward edge of the first middle portion and the second middle portion.

[DELETED]

According to various preferred embodiments, the clip retainer is a unitary, monolithic structure. In various preferred embodiments, the radially outward surface of the rotor drive lug has a scalloped indentation and the first segment and the second segment of the clip retainer each comprises a radially outward edge that substantially follows the scalloped indentation.

According to various preferred embodiments, the rotor drive lug includes two axially extending through-holes. In such embodiments, the first circumferentially lateral portions and the second circumferentially lateral portions comprise apertures that align with the two axially extending through-holes. Further, the brake system may further include two fasteners respectively extending through the two axially extending through-holes and through the apertures.

According to the invention, a middle radial dimension of the first middle portion and the second middle portion is less than a lateral radial dimension of the first circumferentially lateral portions and the second circumferentially lateral portions. In various preferred embodiments, the middle radial dimension is less than a diameter of a head of the two fasteners. In various preferred embodiments, the radially outward surface of the rotor drive lug includes an axially extending groove through which the bridge segment extends. According to the present invention, a radially outward surface of the bridge segment is substantially flush with the radially outward surface of the rotor drive lug.

Also disclosed herein, according to various preferred embodiments, is a method of installing a clip retainer of a brake system. The method may include positioning a first segment and a second segment of the clip retainer on a first axial side and a second axial side, respectively, of a rotor drive lug of the brake system. The method may also include positioning a bridge segment of the clip retainer within an axially extending groove formed in a radially outward surface of the rotor drive lug. Still further, the method may include inserting two fasteners through apertures in circumferentially lateral portions of the first segment and the second segment and inserting the two fasteners respectively through two axially extending through-holes of the rotor drive lug. In various preferred embodiments, the clip retainer is a unitary, monolithic structure and positioning the first segment and the second segment of the clip retainer on the first axial side and the second axial side, respectively of the rotor drive lug of the brake system occurs substantially simultaneously as the positioning the bridge segment of the clip retainer within the axially extending groove formed in the radially outward surface of the rotor drive lug.

The forgoing features and elements may be combined in various combinations without exclusivity, without departing from the scope of the appended claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures.
FIG. 1 illustrates a cross-sectional view of a brake system, in accordance with various embodiments;
FIG. 2 illustrates a perspective view of a plurality of rotors and stators of the brake system, in accordance with various embodiments;
FIG. 3 illustrates a magnified perspective view of a rotor of FIG. 2, showing a rotor drive lug, a clip, and a clip retainer, in accordance with various embodiments;
FIG. 4 illustrates a perspective view of a clip retainer, in accordance with various embodiments; and
FIG. 5 illustrates a schematic flow chart diagram of a method of installing a clip retainer, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the invention is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

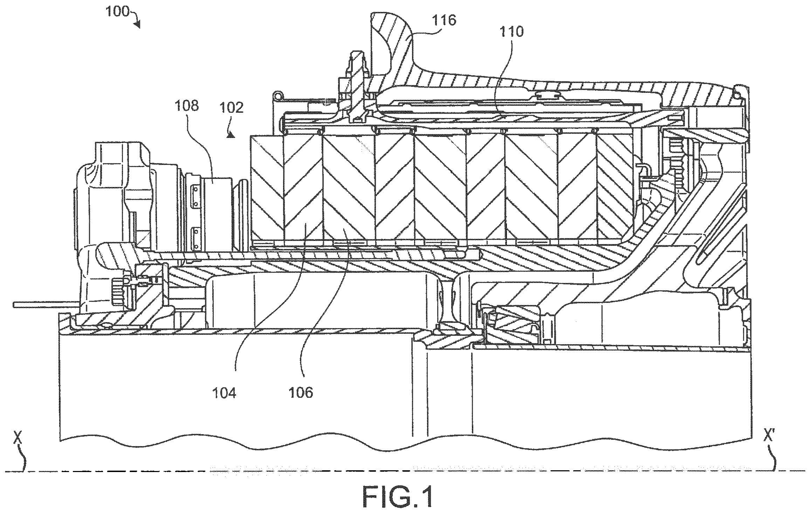

Referring to FIG. 1, a brake system 100 in accordance with various embodiments includes a plurality of disks 102. Although this disclosure includes numerous details and references to an aircraft braking system, the features disclosed herein may be used with other, non-aircraft braking systems, such as car braking systems or the like.

The plurality of disks 102 includes at least one stator 106 and at least one rotor 104 that rotate about an axis X-X' relative to stators 106. The rotors 104 are coupled to an aircraft wheel 116, or wheel 116, via a rotor drive bar 110. Torque of aircraft wheel 116 is transferred to rotors 104 via rotor drive bar 110, and vice versa. The brake system 100 also includes an actuator 108. The actuator 108 may be actuated to compress plurality of disks 102, thereby causing friction between rotors 104 and stators 106, thus reducing the angular velocity of aircraft wheel 116.

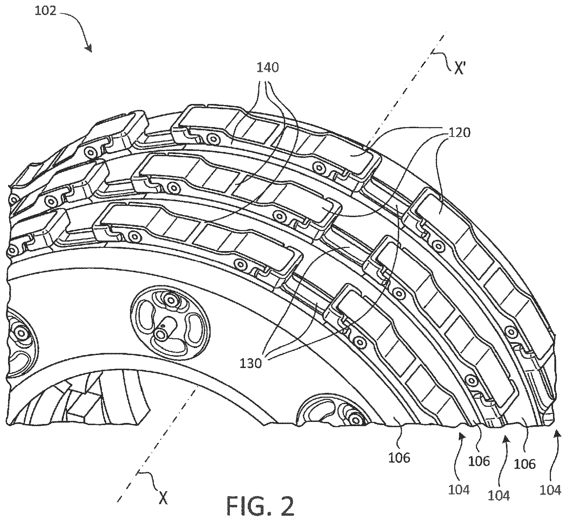

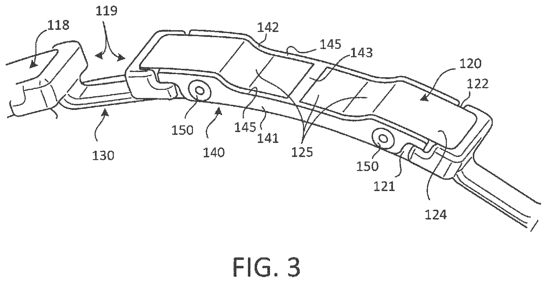

As mentioned above and with reference to FIG. 2, the brake system 100 may include one or more clip retainers 140 that hold one or more clips 130 in a circumferential gap 119 (with momentary reference to FIG. 3) between adjacent rotor drive lugs 118, 120 (with reference to FIG. 3) of a rotor 104. In various embodiments, the clip retainer 140 is used to retain the clip 130 in a radial direction while still allowing the clip 130 to move circumferentially, at least partially, within the circumferential gap 119 (with reference to FIG. 3) between adjacent rotor drive lugs 118, 120 (e.g., allowing the clip to "float"). The clip retainer 140 has a generally arcuate shape that follows/conforms to the arcuate shape of the rotor drive lug 120 to which it is mounted.

With reference to FIG. 3 and according to various embodiments, the clip retainer 140 of the present disclosure includes a first segment 141, a second segment 142 that extends substantially parallel to the first segment 141, and a bridge segment 143 that extends substantially perpendicularly between the first segment 141 and the second segment 142. The clip retainer 140 may be a unitary, monolithic structure and thus the first segment 141, the second segment 142, and the bridge segment 143 may be integrally formed together. The clip retainer 140 may be manufactured via various methods, including stamping, molding, casting, etc. The clip retainer 140 may be made from various materials, such as steel, stainless steel, titanium, titanium-based alloy, cobalt, cobalt-based alloys, nickel, or nickel-based alloy.

With reference to FIG. 3 and according to various embodiments, the first segment 141 of the clip retainer 140 is disposed, in an installed state, on or substantially directly adjacent to a first axial side 121 of the rotor drive lug 120, the second segment 142 of the clip retainer 140 is disposed on or substantially directly adjacent to a second side 122 of the rotor drive lug 120, and the bridge segment 143 is disposed on a radially outward surface 124 of the rotor drive lug 120. Accordingly, the clip retainer 140 may be installed so as to fit substantially around portions of the rotor drive lug 120.

The rotor drive lug 120, according to various embodiments, has a scalloped indentation 125 formed in the radially outward surface 124. The scalloped indentation 125 may provide various heat transfer benefits to the brake system 100. For example, the scalloped indentation 125 may allow increased airflow over the rotors 104, thereby increasing the ability of heat to be dissipated and thereby improving the useful life of various components of the brake system 100. The reduced size of the rotor drive lug 120 due to the scalloped indentation 125 would potentially cause problems for conventional clip retention devices because there may not be sufficient space radially inward of the scalloped indentation 125 on the rotor drive lug 120 to form a through-hole for a fastener of a conventional clip retention device.

The integrally formed bridge segment 143 of the clip retainer 140 of the present disclosure axially extends across the radially outward surface 124 of the scalloped indentation 125. Accordingly, the bridge segment 143 prevents the clip retainer 140 from bending axially outward away from the axial sides 121, 122 of the rotor drive lug 120. In various embodiments, the first segment 141 and the second segment 142 of the clip retainer 140 each include a radially outward edge 145 that substantially follows, matches, and/or contours the shape/geometry of the scalloped indentation 125.

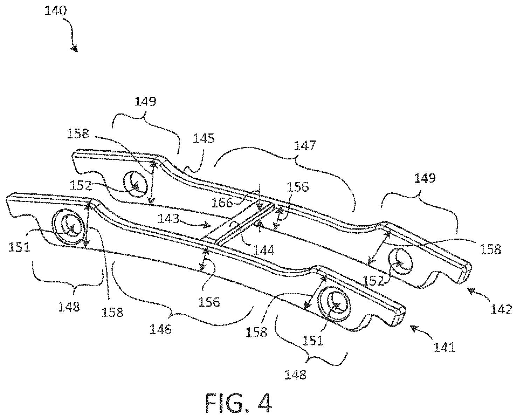

In various embodiments, an axially extending groove may be formed in the radially outward surface 124 and the bridge segment 143 may be fit within the groove. Accordingly, the air flow and heat transfer characteristics imparted to the brake system 100 by the scalloped indentation 125 may not be inhibited by the clip retainer 140. For example, the radially outward edge 145 of the first and second segments 141, 142 and the radially outward surface 144 (with reference to FIG. 4) may be substantially flush with scalloped indentation 125 formed in the radially outward surface 124 of the rotor drive lug 120, thereby allowing ambient heat transfer air to flow across the radially outward surface 124 without obstruction from the clip retainer 140.

With reference to FIG. 4 and according to various embodiments, the first segment 141 of the clip retainer 140 includes a first middle portion 146 and the second segment 142 of the clip retainer 140 includes a second middle portion 147. These middle portions 146, 147 of the first and second segments 141, 142, respectively, may correspond to, for example, the region of the rotor drive lug 120 in the vicinity of the scalloped indentation 125. The first segment 141 may include first circumferentially lateral portions 148 and the second segment 142 may include second circumferentially lateral portions 149. In various embodiments, the bridge segment 143 extends between the first middle portion 146 and the second middle portion 147.

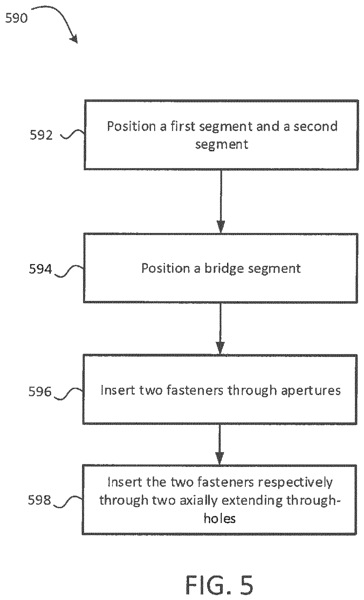

The first circumferentially lateral portions 148 of the first segment 141 may define first apertures 151 that are aligned with corresponding second apertures 152 defined in the second circumferentially lateral portions 149 of the second segment 142. That is, the clip retainer 140 may have aligned apertures 151, 152 that are defined in circumferentially lateral portions 148, 149 of the first and second segments 141, 142 through which fasteners 150 (with brief reference to FIG. 3) may be inserted. As described in greater detail below with reference to FIG. 5, the fasteners 150, which may be rivets, bolts, etc., may extend through the apertures 151, 152 and through corresponding axially extending through-holes formed in the rotor drive lug 120. Thus, the clip retainer 140 of the present disclosure may be retained against the axial surfaces 121, 122 of the rotor drive lug 120 via two fasteners 150 and the bridge segment 143. That is, the fasteners 150 may help to prevent the circumferentially lateral portions 148, 149 of the first and second segments 141, 142 from bending axially outwards away from the rotor drive lug 120 and the bridge segment 143 may help to prevent the middle portions 146, 147 of the first and second segments 141, 142 from bending axially outwards away from the rotor drive lug 120.

As described above and according to various embodiments, a middle radial dimension 156 of the first and second middle portions 146, 147 is comparatively less than a lateral radial dimension 158 of the first and second circumferentially lateral portions 148, 149. Because the comparatively reduced middle radial dimension 156 of the middle portions 146, 147 of the clip retainer 140, the first middle portion 146 and the second middle portion 147 of the first segment 141 and the second segment 142, respectively, may be non-apertured. In other words, the middle portions 146, 147 of the first and second segments 141, 142 may have a continuous outer surface and thus may be solid sections of material and may be free of holes or apertures extending axially therethrough. In various embodiments, the middle radial dimension 156 is comparatively less than a diameter of the apertures 151, 152. In various embodiments, the middle radial dimension 156 is less than a diameter of a head of the fasteners 150.

According to various embodiments, a bridge radial dimension 166 (i.e., the dimension of the bridge segment 143 in the radial direction) is comparatively less than the middle radial dimension 156 of the first and second middle portions 146, 147 of the first and second segments 141, 142 of the clip retainer 140. Accordingly, the radially outward surface 144 of the bridge segment 143, as discussed above, may be substantially flush with the radially outward edge 145 of the first middle portion 146 and the second middle portion 147 of the first segment 141 and the second segment 142, respectively.

With reference to FIG. 5, and according to various embodiments, a method 590 of installing the clip retainer 140 of the brake system 100 is disclosed. The method 590 may include positioning the first segment 141 and the second segment 142 of the clip retainer 140 on the first axial side 121 and the second axial side 122, respectively, of the rotor drive lug 120 at step 592. The method 590 may also include positioning the bridge segment 143 of the clip retainer 140 within an axially extending groove formed in the radially outward surface of the rotor drive lug 120 at step 594. Further, the method 590 may include inserting two fasteners 150 through apertures 151, 152 in circumferentially lateral portions 148, 149 of the first segment 141 and the second segment 142 at step 596 and inserting the two fasteners 150 respectively through two axially extending through-holes of the rotor drive lug 120 at step 598. In various embodiments, the clip retainer 140 is a unitary, monolithic structure and thus steps 592 and 594 may occur substantially simultaneously.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A brake system comprising:
a rotor (104) comprising a rotor drive lug (120) having a first axial side (121), a second axial side (122), and radially outward surface (124), wherein an axially extending groove is defined in the radially outward surface;
a clip (130) disposed in a circumferential gap (119) between the rotor drive lug (118) and an adjacent rotor drive lug (120);
a clip retainer (140) for radially retaining the clip in the circumferential gap, the clip retainer (140) comprising:
a first segment (141) comprising a first middle portion (146) and first circumferentially lateral portions (148);
a second segment (142) extending substantially parallel to the first segment and comprising a second middle portion (147) and second circumferentially lateral portions (149); and wherein the first middle portion and the second middle portion have a middle radial dimension that is comparatively less than a lateral radial dimension of the first circumferentially lateral portions (148) and the second circumferentially lateral portions (149); **characterized in that**
a bridge segment (143) extends substantially perpendicularly between the first middle portion of the first segment and the second middle portion of the second segment, and
**in that** a radially outward surface (144) of the bridge segment is substantially flush with the radially outward surface of the rotor drive lug.

2. The brake system of claim 1, wherein the clip retainer is a unitary, monolithic structure.

3. The brake system of claim 1 or 2, wherein the first circumferentially lateral portions and the second circumferentially lateral portions comprise an aperture (151) for receiving a fastener (150).

4. The brake system of claim 3, wherein the first middle portion and the second middle portion each comprise a continuous outer surface.

5. The brake system of claim 3, wherein the middle radial dimension (156) is comparatively less than a diameter of the aperture (151).

6. The brake system of any preceding claim, wherein a bridge radial dimension of the bridge segment (143) is comparatively less than a middle radial dimension of the first middle portion and the second middle portion.

7. The brake system of claim 6, wherein a radially outward surface (144) of the bridge segment : (143) is substantially flush with a radially outward edge of the first middle portion and the second middle portion.

8. The brake system of any preceding claim, wherein the radially outward surface of the rotor drive lug has a scalloped indentation (125) and the first segment and the second segment of the clip retainer each comprises a radially outward edge (145) that substantially follows the scalloped indentation.

9. The brake system of any preceding claim, wherein:
the rotor drive lug (120) comprises two axially extending through-holes;
the first circumferentially lateral portions (148) and the second circumferentially lateral portions (149) comprise apertures (151, 152) that align with the two axially extending through-holes; and
the brake system further comprises two fasteners (150) respectively extending through the two axially extending through-holes and through the apertures. (151, 152)

## Patentansprüche

1. Bremssystem, Folgendes umfassend:
einen Rotor (104), der einen Rotorantriebszahn (120) umfasst, der eine erste axiale Seite (121), eine zweite axiale Seite (122) und eine radial äußere Oberfläche (124) aufweist, wobei in der radial äußeren Oberfläche eine sich axial erstreckende Nut definiert ist;
einen Clip (130), der in einem Umfangsspalt (119) zwischen dem Rotorantriebszahn (118) und einem angrenzenden Rotorantriebszahn (120) angeordnet ist;
einen Cliphalter (140), um den Clip radial in der Umfangsnut zu halten, wobei der Cliphalter (140) Folgendes umfasst:
ein erstes Segment (141), das einen ersten Mittelabschnitt (146) und erste umfängliche Seitenabschnitte (148) umfasst;
ein zweites Segment (142), das sich im Wesentlichen parallel zu dem ersten Segment erstreckt und einen zweiten Mittelabschnitt (147) und zweite umfängliche Seitenabschnitte (149) umfasst; und wobei der erste Mittelabschnitt und der zweite Mittelabschnitt eine mittlere radiale Abmessung aufweisen, die vergleichsweise kleiner ist als eine seitliche radiale Abmessung der ersten umfänglichen Seitenabschnitte (148) und der zweiten umfänglichen Seitenabschnitte (149); **dadurch gekennzeichnet, dass**:
sich ein Überbrückungssegment (143) im Wesentlichen rechtwinklig zwischen dem ersten Mittelabschnitt des ersten Segments und dem zweiten Mittelabschnitt des zweiten Segments erstreckt; und dadurch, dass
eine radial äußere Oberfläche (144) des Überbrückungssegments im Wesentlichen bündig mit der radial äußeren Oberfläche des Rotorantriebszahns ist.

2. Bremssystem nach Anspruch 1, wobei der Cliphalter eine einheitliche, monolithische Struktur ist.

3. Bremssystem nach Anspruch 1 oder 2, wobei die ersten umfänglichen Seitenabschnitte und die zweiten umfänglichen Seitenabschnitte eine Öffnung (151) umfassen, um ein Befestigungselement (150) aufzunehmen.

4. Bremssystem nach Anspruch 3, wobei der erste Mittelabschnitt und der zweite Mittelabschnitt jeweils eine kontinuierliche äußere Oberfläche umfassen.

5. Bremssystem nach Anspruch 3, wobei die mittlere radiale Abmessung (156) vergleichsweise kleiner ist als ein Durchmesser der Öffnung (151).

6. Bremssystem nach einem der vorhergehenden Ansprüche, wobei eine radiale Überbrückungsabmessung des Überbrückungssegments (143) vergleichsweise kleiner ist als eine mittlere radiale Abmessung des ersten Mittelabschnitts und des zweiten Mittelabschnitts.

7. Bremssystem nach Anspruch 6, wobei eine radial äußere Oberfläche (144) des Brückensegments (143) im Wesentlichen bündig mit einer radial äußeren Kante des ersten Mittelabschnitts und des zweiten Mittelabschnitts ist.

8. Bremssystem nach einem der vorhergehenden Ansprüche, wobei die radial äußere Oberfläche des Rotorantriebszahns eine gezackte Einbuchtung (125) aufweist und das erste Segment und das zweite Segment des Cliphalters jeweils eine radial äußere Kante (145) umfassen, die im Wesentlichen der gezackten Einbuchtung folgen.

9. Bremssystem nach einem der vorhergehenden Ansprüche, wobei:
der Rotorantriebszahn (120) zwei sich axial erstreckende Durchgangslöcher umfasst;
die ersten umfänglichen Seitenabschnitte (148) und die zweiten umfänglichen Seitenabschnitte (149) Öffnungen (151, 152) umfassen, die mit den zwei sich axial erstreckenden Durchgangslöchern auf einer Linie liegen; und
das Bremssystem ferner zwei Befestigungselemente (150) umfasst, die sich jeweils durch die sich axial erstreckenden Durchgangslöcher und durch die Öffnungen (151, 152) erstrecken.

## Revendications

1. Système de freinage comprenant :
un rotor (104) comprenant une patte d'entraînement de rotor (120) ayant un premier côté axial (121), un second côté axial (122) et une surface radialement extérieure (124), dans lequel une rainure s'étendant axialement est définie dans la surface radialement extérieure ;
une attache (130) disposée dans un espace circonférentiel (119) entre la patte d'entraînement de rotor (118) et une patte d'entraînement de rotor adjacente (120) ;
un dispositif de retenue d'attache (140) pour retenir radialement l'attache dans l'espace circonférentiel, le dispositif de retenue d'attache (140) comprenant :
un premier segment (141) comprenant une première partie médiane (146) et des premières parties circonférentiellement latérales (148) ;
un second segment (142) s'étendant sensiblement parallèlement au premier segment et comprenant une seconde partie médiane (147) et des secondes parties circonférentiellement latérales (149) ; et dans lequel la première partie médiane et la seconde partie médiane ont une dimension radiale médiane qui est comparativement inférieure à une dimension radiale latérale des premières parties circonférentiellement latérales (148) et des secondes parties circonférentiellement latérales (149) ; **caractérisé en ce qu'**un segment de pont (143) s'étend sensiblement perpendiculairement entre la première partie médiane du premier segment et la seconde partie médiane du second segment et **en ce qu'**une surface radialement extérieure (144) du segment de pont affleure sensiblement la surface radialement extérieure de la patte d'entraînement de rotor.

2. Système de freinage selon la revendication 1, dans lequel le dispositif de retenue d'attache est une structure monolithique unitaire.

3. Système de freinage selon la revendication 1 ou 2, dans lequel les premières parties circonférentiellement latérales et les secondes parties circonférentiellement latérales comprennent une ouverture (151) pour recevoir un élément de fixation (150).

4. Système de freinage selon la revendication 3, dans lequel la première partie médiane et la seconde partie médiane comprennent chacune une surface extérieure continue.

5. Système de freinage selon la revendication 3, dans lequel la dimension radiale médiane (156) est comparativement inférieure à un diamètre de l'ouverture (151).

6. Système de freinage selon une quelconque revendication précédente, dans lequel une dimension radiale de pont du segment de pont (143) est comparativement inférieure à une dimension radiale médiane de la première partie médiane et de la seconde partie médiane.

7. Système de freinage selon la revendication 6, dans lequel une surface radialement extérieure (144) du segment de pont (143) affleure sensiblement un bord radialement extérieur de la première partie médiane et de la seconde partie médiane.

8. Système de freinage selon une quelconque revendication précédente, dans lequel la surface radialement extérieure de la patte d'entraînement de rotor a une échancrure dentelée (125) et le premier segment et le second segment du dispositif de retenue d'attache comprennent chacun un bord radialement extérieur (145) qui suit sensiblement l'échancrure dentelée.

9. Système de freinage selon une quelconque revendication précédente, dans lequel :
la patte d'entraînement de rotor (120) comprend deux trous traversants s'étendant axialement ;
les premières parties circonférentiellement latérales (148) et les secondes parties circonférentiellement latérales (149) comprennent des ouvertures (151, 152) qui s'alignent avec les deux trous traversants s'étendant axialement ; et
le système de freinage comprend en outre deux éléments de fixation (150) s'étendant respectivement à travers les deux trous traversants s'étendant axialement et à travers les ouvertures (151, 152).
